# FASCICULE DE BREVET EUROPEEN

(11) **EP 1 694 946 B1**
(45) Date de publication et mention de la délivrance du brevet: **11.02.2009**
(21) Numéro de dépôt: 04817219.1
(22) Date de dépôt: 13.10.2004
(51) Int. Cl.: C04B 38/00, F01N 3/022, B01D 53/94, B01J 23/40

(54) **FILTRE CATALYTIQUE A BASE DE CARBURE DE SILICIUM (-SiC)POUR LA COMBUSTION DES SUIES ISSUES DES GAZ D'ECHAPPEMENT D'UN MOTEUR A COMBUSTION**
AUS SILIZIUMKARBID (-SIC) HERGESTELLTER KATALYTISCHER FILTER ZUR VERBRENNUNG VON RUSS AUS ABGASEN EINES VERBRENNUNGSMOTORS
CATALYTIC FILTER MADE FROM SILICON CARBIDE (-SIC) FOR THE COMBUSTION OF SOOT FROM EXHAUST GASES OF AN INTERNAL COMBUSTION ENGINE

(30) Priorité: 16.10.2003 FR 0312085; 08.07.2004 FR 0407635
(43) Date de publication de la demande: 30.08.2006
(73) Titulaire: SICAT, 75008 Paris (FR); CENTRE NATIONAL DE LA RECHERCHE SCIENTIFIQUE (CNRS), 75794 Paris Cedex 16 (FR); Université Louis Pasteur de Strasbourg, F-67000 Strasbourg (FR)
(72) Inventeur: PHAM, Charlotte, F-67700 Saverne (FR); PESANT, Laurie, 92500 Rueil-Malmaison (FR); BERNHARDT, Pierre, F-67190 Heiligenberg (FR); WOLF, Michel, F-67170 Brumath (FR); GARIN, François, F-67300 Schiltigheim (FR); PHAM-HUU, Cuong, F-67700 Saverne (FR); LEDOUX, Marc, F-67000 Strasbourg (FR); KARTHEUSER, Michel, 67480 Auenheim (FR); VANHAECKE, Estelle, F-67000 Strasbourg (FR)
(74) Mandataire: Schmidt, Martin Peter
(86) Numéro de dépôt international: PCT/FR2004/002590
(87) Numéro de publication internationale: WO 2005/038204

(56) Documents cités:
- EP-A- 0 543 752
- EP-A- 1 225 311
- WO-A-93/13303
- FR-A- 2 705 340
- FR-A- 2 766 389

## Description

### Domaine technique de l'invention

La présente invention concerne la purification catalytique de gaz d'échappement de moteurs à combustion, et notamment de moteurs diesel, à l'aide d'un catalyseur constitué par une mousse de carbure de silicium et une phase active constituée par au moins un élément métallique.

### Etat de la technique

Dans un cas idéal, les gaz d'échappement d'un moteur à combustion d'hydrocarbures ne contiennent que du CO₂ et du H₂O. En réalité, on observe la formation d'autres produits gazeux ou solides. Ceci est lié d'une part à la présence d'impuretés contenues dans les hydrocarbures (telles que les composés soufrés), et d'autre part à la complexité des reactions chimiques lors de la combustion. A titre d'exemple, il est connu que la combustion dans un moteur Diesel est inhomogène et conduit à des températures très variables d'un point à l'autre du jet de carburant. Ledit jet de carburant peut, de surcroît, montrer localement un caractère turbulent, ce qui complique considérablement l'analyse et la prévision des réactions chimiques lors de la conception du moteur.

On observe donc lors de la combustion d'hydrocarbures, tels que l'essence ou le gasoil, dans un moteur à combustion, d'une part des rejets gazeux tels que CO, NOₓ, hydrocarbure imbrûlés, CO₂ et H₂O, et d'autre part l'émission de particules solides de taille variable.

La purification des gaz d'échappement de moteurs diesel pose trois problèmes différents. Le premier problème concerne la conversion du CO, un gaz toxique et explosif, en CO₂. Le deuxième problème concerne la conversion des oxydes d'azote, (représentés par la formule NOₓ et contenant principalement des molécules telles que NO et NO₂), qui résultent de la réaction entre l'azote et l'oxygène contenus dans l'air et qui ont un effet irritant sur les muqueuses du système respiratoire, en azote. Le troisième problème concerne la formation de particules solides lors de la combustion. Ces particules peuvent contenir notamment de la suie et des hydrocarbures lourds condensés, ainsi que des composés minéraux, tels que des sulfates, présents dans le carburant. Leur taille est très variable en fonction du régime moteur et de la température dans la chambre de combustion ; les plus petites peuvent pénétrer profondément dans les poumons, bronches et alvéoles pulmonaires, diminuant ainsi la capacité pulmonaire. Les effets mutagène ou cancérigène notamment de la suie et des particules d'hydrocarbures lourds condensés (tels que des molécules polynucléides aromatiques), sont connus. Par ailleurs, les gaz d'échappement peuvent contenir du carburant imbrûlé. Des particules solides de très faible taille peuvent aussi se former dans d'autres types de moteur à combustion, et notamment d'autres types de moteur utilisant des carburants liquides. Mais c'est surtout dans le domaine des moteurs Diesel que le problème de destruction des particules solides émises est le plus critique.

Pour résoudre ces problèmes, l'homme du métier dispose de plusieurs approches. Il peut tout d'abord rechercher un régime de combustion qui minimise la formation de ces rejets indésirables. Cette réduction à la source peut être substituée ou complétée par des pots catalytiques. Cependant, les pots catalytiques utilisés pour minimiser les NOₓ dans les moteurs à essence ne donnent pas forcément de bons résultats pour les moteurs diesel car la teneur en oxygène et la température des gaz d'échappement d'un moteur diesel et d'un moteur à essence sont différentes.

Le troisième problème, lié aux particules solides, est plus spécifique aux moteurs diesel qui utilisent un carburant plus lourd et ont une température de fonctionnement plus basse que les moteurs à essence. L'homme du métier connaît plusieurs systèmes de filtration des gaz d'échappement de moteurs diesel visant à retenir les particules. Un système de filtres utilise des fils métalliques ou céramiques, par exemple sous forme d'éponge, enrobés d'un dépôt catalytique. Ce système est assez sensible aux vibrations, qui tendent à user le dépôt catalytique ; celui-ci forme des poussières émises à l'échappement. Un autre système utilise des filtres en mousse de céramique, typiquement à base de carbure de silicium SiC extrudé ou de cordiérite extrudée, comportant une distribution assez étroite de larges pores (diamètre de l'ordre de 100 µm à 500 µm) avec peu de canaux qui ne débouchent pas. Ces filtres sont caractérisés par une bonne capacité de rétention avant colmatage et une meilleure résistance à la fissuration, mais montrent une perte de charge importante. Ils peuvent être fabriqués sous forme de cartouches ou bougies filtrantes, mais sont coûteux.

On connaît des filtres monolithes de structure mousse pour lesquels une porosité large est utilisée en entrée du filtre et une porosité plus petite en sortie, la variation de porosité pouvant être continue ou discrète, sur un seul monolithe présentant des zones de porosité différente, ou par juxtaposition de filtres successifs présentant chacun une porosité différente.

A titre d'exemple, il est connu de EP 0 050 340 (Bridgestone Tire Co. Ltd), de FR 2 498 471 (W.R. Grace & Co.), de US 4,912,076 (Swiss Aluminum Ltd.), et de FR 2 650 628 (Aris s.a.), de préparer des filtres à particules à partir d'éléments filtrants en matériau céramique présentant chacun une porosité différente, de manière à ce que les gaz à purifier traversent d'abord une zone à pores larges, et ensuite une zone à porosité plus petite. Le brevet US 4,857,088 (Swiss Aluminum Ltd.) décrit un filtre à particules à porosité non uniforme de type plus complexe, mais qui est toujours basé sur le même principe d'utiliser un filtre formé à partir d'éléments filtrants en matériau céramique présentant chacun une porosité différente. Le brevet US 5,053,062 (Donaldson Co.) propose l'utilisation d'un disque filtrant à larges pores à l'entrée d'une cartouche filtrante, ledit disque filtrant présentant une émissivité thermique élevée de manière à ce que la combustion des particules grossières de carbone recueillies sur ce disque contribue à l'échauffement de la cartouche filtrante.

Une variante particulière des filtres à porosités non uniforme sont les filtres de type nid d'abeilles dans lesquels la paroi poreuse est recouverte sur la surface de sortie d'une fine membrane de porosité plus fine destinée à favoriser la filtration des très fines particules sans augmenter notablement la perte de charge. A titre d'exemple, le brevet US 4,846,906 (The Durion Company) décrit des filtres pour gaz d'échappement de moteurs Diesel comprenant un corps filtrant à base de céramiques à porosité ouverte, recouvert d'une membrane céramique à porosité ouverte avec une taille moyenne de pores plus petite que celle dudit corps. Les céramiques sont préparées à partir d'un gel d'aluminosilicates. Le brevet US 4,871,495 (The Durion Company) décrit un procédé thermique permettant de préparer des céramiques, notamment à base de cordierite, présentant une taille de pores contrôlée. La demande de brevet WO 00/01463 (Silentor Notox) décrit un filtre pour gaz d'échappement de moteurs Diesel composé d'un élément filtrant présentant une structure en nid d'abeille, avec une taille de pores de l'ordre de 35 - 500 µm, et d'éléments filtrants présentant une taille de pores plus petite, 5 - 10 µm dans une zone intermédiaire, et 0,5 - 5 µm dans la zone extérieure que les gaz traverses en dernier. Cet élément filtrant peut être en matériau céramique à base de SiC, préparé par extrusion de poudres de SiC, dont une partie doit avoir une taille de grain très fine (de l'ordre de 0.1 - 10 µm) pour pouvoir agir comme liant. L'usage d'un revêtement en alumine de type wash-coat est recommandé.

Une description très complète de l'état de la technique en matière de filtres Diesel se trouve dans l'article « Pollution atmosphérique. Post-traitements » de P. Degobert, paru en mai 1995 dans le traité « Mécanique et Chaleur », volume BL1, fascicule B 2 711 de la collection « Techniques de l'Ingénieur »

Tous ces systèmes posent le problème de leur régénération. En effet, les particules retenues dans le filtre bouchent les pores, ce qui augmente la perte de charge. Il faut donc enlever les particules en les brûlant, soit en continu, soit en discontinu, Or, la température des gaz d'échappement d'un moteur Diesel est trop basse pour assurer la combustion directe des particules de suie ou d'hydrocarbures captées ; leur température est le plus souvent inférieure à 400 °C, alors que la combustion spontanée desdites particules est observée à partir d'une température minimale de l'ordre de 400 °C à 800 °C (en fonction de la composition des particules). Il faut donc apporter un catalyseur et / ou de la chaleur pour assurer la combustion permanente ou périodique des particule captées. L'apport de chaleur requiert un contrôle sophistiqué de la température, car la conductivité de chaleur des matériaux utilisés dans les systèmes actuellement disponibles est faible. Il existe plusieurs systèmes de régénération, en série (avec un seul filtre), ou en parallèle (avec au moins deux filtres), avec ou sans apport d'air, avec apport de chaleur par chauffage électrique ou chalumeau. Ces systèmes de filtres sont complexes et coûteux, et nécessitent des systèmes de régulation complexes.

A titre d'exemple, un système de filtre utilisé sur des véhicules de tourisme utilise des cartouches à base de SiC broyé très fin, extrudé en nid d'abeille et fritté à une température supérieure à 1500 °C. Dans ces filtres, typiquement un canal sur deux est bouché, ce qui favorise le passage des gaz à travers les pores de la céramique plutôt qu'à travers le système de canaux. Les particules retenues par le filtre sont périodiquement brûlées en ajoutant au carburant un catalyseur. Ce système est efficace mais coûteux. La demande de brevet EP 1 225 311 A2 (Th. J. Heimbach GmbH) décrit un dispositif filtrant en céramique de α-SiC de type « nid d'abeille ».

Un autre système est décrit dans le document de P. Degobert mentionné ci-dessus : un filtre en mousse céramique fabriquée à partir de carbure de silicium ou de cordiérite, présentant une distribution assez étroite de larges pores quasi circulaires d'un diamètre de 250 à 500 µm, tortueux en profondeur, avec peu de canaux qui ne débouchent pas. Ces filtres sont fabriqués par imprégnation d'une matrice de mousse de polyuréthane par une pâte de cordiérite, qui est ensuite calcinée. On obtient ainsi une mousse de cordiérite avec environ 20 - 30 pores par cm³ ; ces filtres, fabriqués sous forme de bougies ou cartouches, ont un taux de rétention de l'ordre de 60 à 70 %.

Encore un autre système de filtre est basé sur une cartouche en cordiérite extrudée en nid d'abeille, imprégnée de métaux précieux tels que le platine.

Le brevet EP 0 160 482 B1 (Engelhard Corporation) divulgue un filtre constitué d'une cartouche en matériau céramique à parois poreuses imprégnées d'un catalyseur constitué d'un mélange d'un élément du groupe du platine et d'un oxyde d'un élément alcalino-terreux. Dans ce filtre, ledit catalyseur permet d'abaisser la température de combustion des particules de suies, qui sont donc éliminées en continu. Ladite cartouche peut être constituée en matériau céramique cellulaire ou monolithique.

La demande de brevet EP 1 142 619 A1 (Ibiden) divulgue un système de filtre diesel, dont le milieu filtrant céramique consiste en SiC poreux fritté, d'un diamètre moyen de pores d'environ 5 à 15 µm, dont au moins 20 % sont des pores ouverts. Ce milieu filtrant est fabriqué à partir d'un mélange de poudres α-SiC et de β-SiC, préparé avec un liant organique, ou à partir de nitrure de silicium, sialon, alumine, cordiérite, mullite. Plusieurs de ces blocs céramiques sont assemblés à l'aide d'une pâte en fibres céramiques à base de silicate d'aluminium. Cela évite d'utiliser des blocs de taille relativement importante, car la probabilité de formation de fissures dans le matériau céramique augmente avec la taille du bloc.

La demande de brevet français FR 2 818 163 (Renault) décrit un nouveau catalyseur à base de cuivre permettant de brûler ces particules de suie aux températures habituelles des gaz d'échappement, soit environ 300°C. Ce catalyseur peut être appliqué sur des supports céramiques connus, notamment de type oxyde, tel que la cordiérite, ou sur des filtres métalliques.

La demande de brevet WO 93/13303 (Stobbe) décrit un système de filtre en α-SiC fritté à 2200 - 2600°C, composé de segments qui peuvent être chauffés, individuellement ou en groupes, par effet Joule afin de brûler les particules de suie. La résistance électrique de ce produit est assez élevée, et un fort courant est nécessaire pour chauffer. La demande de brevet publiée sous le numéro JP 07-080226 (Ibiden) propose de réduire la résistance électrique des céramiques de SiC en ajoutant des additifs.

L'article « An optimal NOx assisted abatement of diesel soot in an advanced catalytic filter design » de A. Setiabudi, M. Makkee et J.A. Moulijn, paru dans la revue Applied Catalysis B : Environmental, vol 42, p. 35-45 (2003) décrit un catalyseur préparé par imprégnation d'une mousse de SiC de 20 ppi avec une solution de Pt(NH₃)₄ Cl₂ H₂O, conduisant à une teneur en Pt de 1,5%.

On connaît différents procédés de fabrication de SiC. A titre d'exemple, le brevet EP 313 480 B1 (Pechiney Electrométallurgie) décrit un procédé de production de grains fins de carbure de silicium consistant à générer dans une première zone de réaction des vapeurs de SiO par chauffage d'un mélange SiO2 + Si à une température comprise entre 1100 et 1400 °C sous une pression comprise entre 0,1 et 1,5 hPa, et puis à mettre en contact ces vapeurs de SiO avec du carbone réactif de surface spécifique d'au moins 200 m²/g à une température comprise entre 1100 et 1400 °C. Une variante de ce procédé est décrit dans le brevet EP 543 752 B1 (Pechiney Recherche). Le procédé décrit dans ce brevet consiste à préparer par pyrolyse d'une mousse de polyuréthane imprégnée d'une résine thermodurcissable à une température comprise entre 700 et 900 °C une mousse de carbone, à activer la mousse par balayage de CO₂ à 700 - 1000 °C, puis à exposer cette mousse à une vapeur de SiO pour former une mousse de SiC.

Le brevet EP 440 569 B1 (Pechiney Recherche) décrit un procédé d'obtention de SiC consistant à mélanger de la résine furfurylique avec un durcisseur organique et de la poudre de silicium, à durcir ce mélange dans une étuve à environ 100 à 120 °C, à carboniser ce mélange durci en le chauffant à une température de l'ordre de 900 °C sous balayage d'azote, et puis à carburer ce produit intermédiaire en le chauffant à une température de l'ordre de 1200 °C sous balayage d'argon, suivi éventuellement de l'élimination de l'excès de carbone à une température d'environ 600 °C sous air. Le brevet EP 511 919 B1 (Pechiney Recherche) décrit la préparation de catalyseurs à partir de ce produit.

Le brevet EP 624 560 B1 (Pechiney Recherche) décrit un procédé d'obtention de SiC consistant à imprégner une mousse de polyuréthane avec une suspension de poudre de silicium dans une résine organique avec un rapport de masse contrôlé, a polymériser la résine, à carboniser les polymères organiques, et puis à carburer le silicium. Selon l'enseignement de ce brevet, pour la filtration de gaz d'échappement de moteurs Diesel, une surface spécifique BET inférieure à 5 m²/g et une très faible mésoporosité sont préférés.

On connaît par ailleurs des mousses à base de SiC présentant des pores de taille différente, par exemple des macropores et des micropores. De telles mousses, préparées par des procédés différents, sont divulguées dans les brevets FR 2 766 389 (Pechiney Recherche), qui décrit une mousse présentant une porosité à distribution bimodale, et dans le brevet FR 2 705 340 (Pechiney Recherche).

Dans tous les cas, en l'état actuel de la technique, l'utilisation d'un filtre Diesel engendre un surcoût non-négligeable, et par conséquent, seules quelques modèles de véhicules en sont équipés.

Compte tenu des problèmes liés au colmatage, à la tenue aux vibrations et aux cycles thermiques, à la régénération, à la régulation et au coût des filtres selon l'état de la technique, on recherche activement des dispositifs filtrants plus simples, plus robustes et moins coûteux. Un tel dispositif devrait mettre en oeuvre un milieu filtrant qui soit facile à fabriquer en différentes formes géométriques, et qui ne soit pas sujet à la formation de fissures lors de la fabrication ou manipulation.

### Problème posé

Le problème auquel essaye de répondre la présente invention est donc de proposer un filtre catalytique à particules pour la purification des gaz d'échappement de moteurs à combustion, plus simple à fabriquer, plus robuste, moins cher que les filtres connus, qui retient autant de particules que possible, et notamment les particules de petite taille, qui présente une faible perte de charge et qui se prête à une régénération continue.

### Objets de l'invention

La présente invention a pour objet une pièce en mousse de β-SiC ayant une surface spécifique d'au moins 5 m²/g et présentant au moins deux zones A et B ayant une distribution de porosité différente, caractérisée en ce que ladite pièce a été fabriquée par transformation chimique d'un milieu précurseur poreux constitué d'au moins deux blocs A' et B' ayant une distribution de porosité différente, et en ce que lesdites au moins deux zones A et B sont issues de ladite transformation chimique desdits au moins deux blocs A' et B'.

Un autre objet est un procédé de fabrication avec deux variantes pour les étapes finales, permettant de réaliser une telle pièce en mousse de β-SiC ayant une surface spécifique d'au moins 5 m²/g et présentant au moins deux zones A et B ayant une distribution de porosité différente.

Dans ces deux procédés (A) et (B), on prépare d'abord un milieu précurseur en mousse carbonisable à structure alvéolaire ouverte (telle qu'une mousse de polyuréthane) comportant au moins deux zones ayant une distribution de porosité différente, que l'on imprègne d'une résine durcissable, et de préférence thermodurcissable, qui se présente dans le procédé (B) sous la forme d'une suspension de poudre de silicium dans une résine durcissable, et de préférence thermodurcissable. Ensuite, on réticule ladite résine, dans le cas des résines thermodurcissables par augmentation progressive de la température. La suite du procédé est différente pour les procédés (A) et (B) :
Dans le procédé (A), on pyrolyse ensuite ladite mousse pour former une mousse de carbone, on active ladite mousse en carbone en la chauffant sous balayage de CO₂ à une température comprise entre 700 °C et 1000°C, et on expose ladite mousse en carbone activée à une vapeur de SiO pour former une mousse en carbure de silicium.
Dans le procédé (B), on carbonise la mousse carbonisable à structure alvéolaire ouverte et la résine, et on siliciure le carbone ainsi formé par augmentation progressive de la température jusqu'à une température ne dépassant pas 1600 °C. Dans le deux procédés, on peut éliminer le carbone résiduel par oxydation du produit à une température comprise entre 650 °C et 950 °C.

Encore un autre objet de l'invention est un dispositif de cartouche de filtre catalytique comportant un milieu filtrant en mousse de β-SiC ayant une surface spécifique d'au moins 5 m²/g, et au moins une phase active, ladite cartouche étant entourée d'une paroi solide en matériau imperméable aux gaz, et équipée d'au moins deux ouvertures, dont l'une pour l'entrée des gaz à filtrer et l'autre pour la sortie des gaz débarrassés d'au moins une partie de leurs particules solides, ladite cartouche étant caractérisée en ce que ledit milieu filtrant comporte au moins deux zones ayant une porosité différente.

### Description des figures

La figure 1 montre la photographie de la mousse de taille caractéristique de 2150 µm. La règle est calibrée en millimètres. Les flèches montrent les pentagones unitaires. Les cercles entourent les polygones utilisés pour déterminer la taille des pores de la mousse.
La Figure 2 montre le taux de conversion de la suie en fonction du temps à 300°C :
   (a) Suie seule (vitesse de combustion : 0,4 mg de suie par heure),
   (b) Suie déposée sur une mousse de β-SiC imprégnée de Pt (vitesse de combustion : 10,4 mg de suie par heure).
   Ces courbes montrent l'efficacité du dispositif filtre catalytique dans la combustion d'une suie modèle.
La figure 3 montre la distribution de la taille des particules contenues dans les gaz d'échappement d'un véhicule de tourisme équipé d'un moteur diesel (test sur banc à rouleaux pour 900, 2000 et 3000 trs/min.). La figure 3 correspond à l'exemple 3.
La figure 4, qui correspond à l'exemple 4, montre l'évolution de la perte de charge en fonction du temps pour des mousses catalysées (a) et non catalysées (b).
La figure 5, qui correspond à l'exemple 4, montre la distribution en nombre de particules émises pour des prélèvements en amont (a) et en aval (b) du système catalytique.
La figure 6 montre la distribution de porosité d'une mousse en β-SiC typique., avec la micrographie de la section d'un pont alvéolaire (grandissement défini par la barre indiquant la longueur de 10 µm).

### Description détaillée de l'invention

La demanderesse a trouvé que le problème peut être résolu en utilisant un dispositif de filtre catalytique comportant au moins une mousse à base de β-SiC dont la taille de pores est ajustée de façon à ce que le gaz à purifier traverse au moins deux zones ayant une distribution de porosité différente. Ladite mousse est associée à une phase active, généralement constituée par un élément du groupe du platine seul ou sous forme d'alliage ou de mélange avec un autre élément.

### a) Définitions

On appelle ici « milieu filtrant » le milieu traversé par les gaz d'échappement ; ledit milieu retient au moins une partie des particules contenues dans lesdits gaz d'échappement.

La porosité d'un matériaux est habituellement définie par référence à trois catégories de pores qui se distinguent par leur taille : la microporosité (diamètre inférieur à environ 2 nm), la mésoporosité (diamètre compris entre environ 2 et environ 50 nm) et la macroporosité (diamètre supérieur à environ 50 nm).

On entend ici par « distribution de porosité » la courbe de distribution de la taille de pores par unité de volume du milieu filtrant ou d'une partie de celui-ci. Cette distribution peut être représentée en bonne approximation par une valeur moyenne et un écart-type, si elle est approximativement gaussienne. Dans d'autres cas, comme par exemple dans celui d'une distribution bi-modale, il faudra utiliser plusieurs paramètres pour décrire convenablement la distribution de porosité. Les pièces en mousse de β-SiC selon l'invention montrent une distribution complexe caractérisée par la présence d'alvéoles ouvertes et d'une méso- et macroporosité, la micropososité étant non significative dans le contexte de la présente invention. Les « alvéoles ouvertes » ont un diamètre d'au moins environ 200 µm.

On entend ici par « zones ayant une distribution de porosité différente » au moins deux zones de référence du milieu filtrant dont la distribution de porosité, telle que définie ci-dessus, est statistiquement significativement différente. A titre d'exemple, le milieu filtrant peut comporter un gradient de porosité ; dans ce cas, les deux zones de référence peuvent être prises aux extrémités du gradient. La dimension d'une zone de référence doit être significativement supérieure à la dimension de la porosité la plus grande contenue dans cette zone. A titre d'exemple, un facteur cinq peut convenir. Le milieu filtrant peut aussi comporter une discontinuité, c'est-à-dire être composé de deux ou plusieurs blocs ayant une distribution de porosité différente ; dans ce cas, chaque bloc peut constituer une « zone ».

On appelle ici « cartouche » un dispositif filtrant catalytique comportant un milieu filtrant constitué par un support et une phase active, entouré d'une paroi solide en matériau imperméable aux gaz (pouvant prendre la forme d'une « enveloppe », c'est-à-dire d'un récipient creux pourvu d'une paroi imperméable, sauf aux endroits d'ouverture prévus) et résistant à la température de travail du dispositif. Cette cartouche est équipée d'au moins deux ouvertures, l'une pour l'entrée des gaz d'échappement, l'autre pour la sortie des gaz d'échappement débarrassés d'au moins une partie de leurs particules solides. Selon l'invention, une cartouche peut contenir une ou plusieurs pièces massives de milieu filtrant catalytique. Si la cartouche contient plusieurs de ces pièces massives constituant la partie catalytique du dispositif, ces pièces massives sont alors appelées « blocs », quelle que soit leur forme géométrique. Si la cartouche ne contient qu'une pièce massive de milieu filtrant, cette pièce est alors appelée une « bougie » : c'est une pièce massive de milieu filtrant, ayant une forme prête à être insérée dans la cartouche.

On appelle ici « milieu précurseur » une pièce ou un assemblage de pièces d'un matériau précurseur du milieu filtrant, qui est ensuite transformé par une ou plusieurs réactions chimiques à température élevée en une pièce constituant tout ou partie d'un milieu filtrant catalytique.

### b) Fabrication de la mousse de β-SiC

La mousse de β-SiC doit présenter une surface spécifique BET d'au moins 5 m²/g, préférentiellement d'au moins 7 m²/g , et encore plus préférentiellement d'au moins 10 m²/g. Dans un mode de réalisation avantageux, ladite mousse de carbure de silicium montre une porosité convenablement ajustée, comme décrit dans la section [0045] du brevet EP 0 624 5 60 B1.

Dans certains modes de réalisation de 1a présente invention, on préfère une mousse de β-SiC qui se présente comme une mousse alvéolaire à porosité ouverte. Nous entendons ici par « mousse alvéolaire » une mousse qui présente à la fois une très faible densité et un grand volume poreux. La mousse alvéolaire en β-SiC utilisée dans le cadre de la présente invention a une densité volumique comprise entre 0,05 g/cm³ et 0,5 g/cm³. Un cube d'une longueur de 1 cm en une telle mousse alvéolaire pèse donc entre 0,05 et 0,5 g. En dessous d'une densité de 0,05 g/cm³, on rencontre des problèmes de tenue mécanique de la mousse. Au-dessus de 0,5 g/cm³, le volume poreux alvéolaire va être réduit et la perte de charge va augmenter sans procurer un avantage fonctionnel. Avantageusement, la densité est comprise entre 0,1 et 0,2 g/cm³.

A titre d'exemple, on peut préparer une mousse alvéolaire de SiC constituée d'une structure tridimensionnelle de cages (« alvéoles ») interconnectées par des ponts alvéolaires, lesdites cages pouvant être assimilées à des dodécaèdres constitués d'un arrangement de 12 fenêtres pentagonales. Cette structure montre deux tailles d'ouvertures permettant le passage du gaz au travers de la pièce :
1. les ouvertures constituées par les pentagones unitaires,
2. les ouvertures plus grandes, assimilables à des cercles et formées par le plus grand diamètre du dodécaèdre.

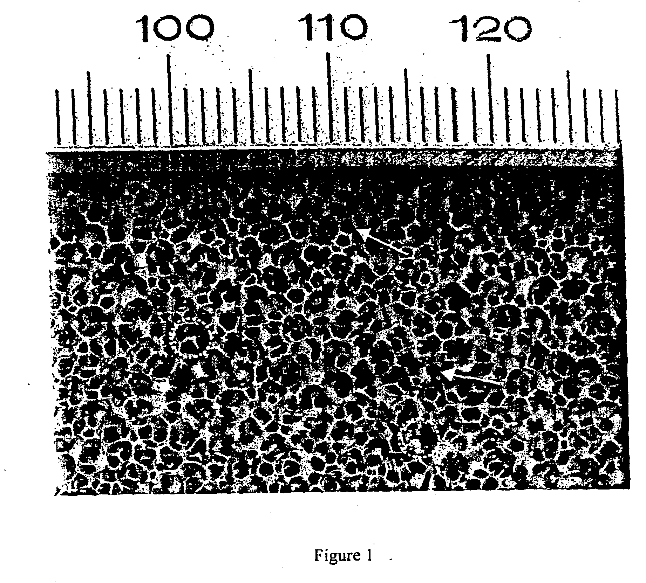

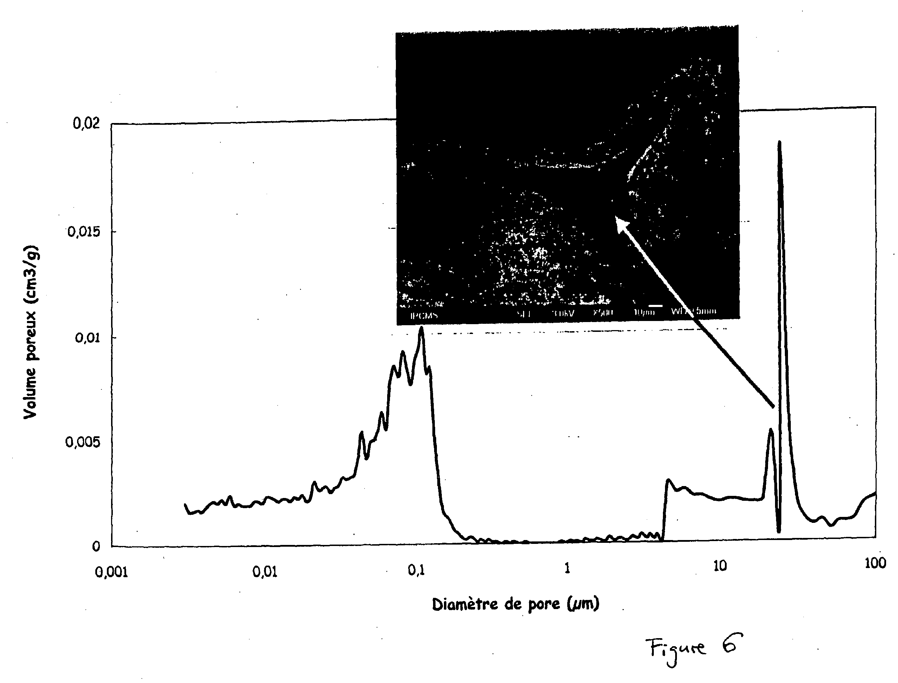

La taille moyenne des ouvertures les plus grandes est mesurée par voie optique et sert de caractérisation de la taille des alvéoles de la mousse : c'est la grandeur retenue pour définir la taille caractéristique des pores d'un milieu filtrant. C'est ce paramètre qui détermine largement la perte de charge d'un milieu filtrant selon l'invention. A titre d'exemple, une mousse de taille caractéristique de 2150 µm est représentée sur la figure 1. La figure 6 montre la micrographie de la section d'un pont alvéolaire. Ce pont est creux ; la porosité (mesurée par intrusion de mercure) qui correspond à cette dimension est de l'ordre de 30 à 40 µm. La figure 6 montre également la présence d'une mésoporosité de l'ordre de 10 à 100 nm. Elle ne montre pas la porosité alvéolaire. La porosité totale d'une telle mousse typique en β-SiC est de l'ordre de 95% Cela veut dire qu'environ 95% du volume macroscopique d'une pièce en mousse de β-SiC est occupé par des pores, dont environ 90% de porosité alvéolaire et environ 5% provenant de la porosité intrinsèque des ponts alvéolaires (avec sa distribution bimodale comme montré sur la figure 6).

L'ouverture des pores de la mousse peut être également modifiée en modifiant la taille des alvéoles de la mousse carbonisable à structure alvéolaire ouverte de départ. On utilisera de préférence des mousses β-SiC de taille moyenne d'alvéoles comprises entre 500 µm et 4000 µm pour chaque zone. Avec une taille de pores inférieure à 500 µm (environ 80 pores per inch, abrégé ppi), le milieu filtrant qui en résulte a une perte de charge trop importante. En pratique, on préfère ne pas descendre au-dessous de 800 µm. Avec une taille de pores au-dessus de 4000 µm (environ 12 ppi), le milieu filtrant qui en résulte n'a pas une efficacité de rétention suffisante. Une taille de pores comprise entre 900 µm ou 1000 µm et 3000 µm, et préférentiellement entre 900 µm et 1800 µm, convient bien dans la majorité des cas. Le facteur limitant dans la conception d'un milieu filtrant selon l'invention est d'une part la perte de charge globale pour les systèmes dans lesquels on essaye d'augmenter l'efficacité par une diminution de la taille moyenne des pores, et d'autre part l'efficacité globale, pour les systèmes dans lesquels on essaye de diminuer la perte de charge globale en augmentant la taille des pores. Avantageusement le milieu filtrant peut être constitué d'une mousse alvéolaire présentant des zones ayant une distribution de porosité différente, formée soit par une succession de mousses de différentes tailles de pores, soit par une pièce unique présentant elle-même un gradient de porosité, soit encore par une combinaison des deux. Pour chaque zone, la porosité moyenne se situe à l'intérieur des fourchettes indiquées ci-dessus. Dans une réalisation avantageuse de l'invention, la distribution en taille des alvéoles dans une zone donnée présente un écart-type qui ne dépasse pas 10%.

Comme mousse carbonisable à structure alvéolaire ouverte, on préfère utiliser une mousse polyuréthane présentant une taille de cellules calibrée et qui ne comporte pas de fraction significative de cellules fermées, et de manière préférée une mousse dont le réseau cellulaire est complètement ouvert. De telles mousses sont disponibles dans le commerce. Les procédés de fabrication du milieu filtrant selon la présente invention sont des « synthèses à mémoire de forme » dans la mesure où la porosité de la mousse carbonisable influe directement sur la porosité de la mousse de β-SiC obtenue. La mousse polyuréthane peut par exemple être à base de polyester ou à base de polyéther. La demanderesse a constaté qu'avec une mousse polyuréthane à base de polyester on obtient une porosité plus ouverte.

Dans une réalisation préférée de l'invention, le milieu précurseur est une mousse polyuréthane avec une taille d'ouverture de pores alvéolaires variables. Cette variation de la distribution poreuse peut se présenter sous forme d'un gradient. Le milieu précurseur peut également être constitué de plusieurs blocs avec des ouvertures de pores différentes, par exemple, une ouverture de pore plus grande à l'entrée du dispositif et une ouverture de pore plus petite à la sortie du même dispositif; un tel milieu précurseur permet de fabriquer un dispositif filtrant discontinu. On peut aussi combiner ces deux modes de réalisation.

Comme indiqué ci-dessus, outre la porosité macroscopique fournie par la structure alvéolaire qui permet une circulation aisée du gaz au travers du filtre, la mousse de β-SiC selon l'invention possède également une porosité mésoporeuse de taille typiquement comprise entre 10 et 100 nm. C'est grâce à cette porosité additionnelle que la mousse selon l'invention développe une surface spécifique importante, d'au moins 5 m²/g et allant jusqu'à environ 25 m²/g qui confère à ladite mousse de très bonnes propriétés de dispersion de phase catalytique. Ainsi, contrairement aux milieux filtrants connus basés sur un matériau en α-SiC, il n'est pas nécessaire de prendre des mesures pour augmenter la surface spécifique du milieu filtrant, par exemple en déposant une phase solide à haute surface spécifique de type wash coat.

Une surface spécifique comprise entre 10 et 20 m²/g est préférée dans le cadre de la présente invention.

La mousse de β-SiC peut être fabriquée par l'un ou l'autre des procédés suivants :
(A) Premier procédé :
   Ce premier procédé comprend les étapes suivantes :
   (Aa) On prépare un milieu précurseur en mousse carbonisable à porosité alvéolaire ouverte, telle qu'une mousse de polyuréthane, avec une distribution poreuse prédéfinie, que l'on imprègne d'une résine durcissable, et de préférence thermodurcissable,
   (Ab) on réticule ladite résine, dans le cas des résines thermodurcissables par augmentation progressive de la température suivie d'un palier qui peut aller de quelques dizaines de minutes à quelques jours,
   (Ac) on pyrolyse ladite mousse pour former une mousse de carbone,
   (Ad) on active ladite mousse en carbone en la chauffant sous balayage de CO₂ à une température comprise entre 700 °C et 1000 °C,
   (Ae) on expose ladite mousse en carbone activé à une vapeur de SiO pour former une mousse de carbure de silicium.

   Dans un mode de réalisation avantageux, l'étape (Ae) est effectué à une température comprise entre 1200°C et 1400°C à pression atmosphérique. On peut éliminer le carbone résiduel par oxydation du produit à une température typiquement comprise entre 650 °C et 950 °C.
(B) Deuxième procédé :
   Ce deuxième procédé comprend les étapes suivantes :
   (Ba) On prépare un milieu précurseur en mousse carbonisable à porosité alvéolaire ouverte, telle qu'une mousse de polyuréthane, avec une distribution poreuse prédéfinie, que l'on imprègne d'une suspension de poudre de silicium dans une résine durcissable, et de préférence thermodurcissable,
   (Bb) on réticule ladite résine, dans le cas des résines thermodurcissables par augmentation progressive de la température suivie d'un palier qui peut aller de quelques dizaines de minutes à quelques jours,
   (Bc) on carbonise la mousse carbonisable à porosité alvéolaire ouverte et la résine contenant du silicium, et on siliciure simultanément le carbone par augmentation progressive de la température jusqu'à une température ne dépassant pas 1600 °C, et préférentiellement comprise entre 1200°C et 1400°C,
   (Bd) on élimine le carbone résiduel par oxydation du produit à une température typiquement comprise entre 650 °C et 950 °C.

Dans les étapes (Aa) et (Ba), la résine thermodurcissable est choisie avantageusement parmi les résines furfuryliques, phénoliques ou polyuréthanes ; on peut aussi utiliser un mélange de ces types de résines. On peut aussi utiliser une résine photodurcissable. Dans l'étape (Bc), on observe parfois une perte de surface spécifique lorsque l'on dépasse une température de l'ordre de 1400°C.

Ces deux procédés peuvent être mis en oeuvre avec des variantes. Une variante très avantageuse du procédé (A) consiste à remplacer l'étape (Aa) par l'étape (Aaa) :
(Aaa) on prépare un milieu précurseur en mousse carbonisable à porosité alvéolaire ouverte, telle qu'une mousse polyuréthane, comportant au moins deux zones ayant une distribution de porosité différente, que l'on imprègne d'une résine durcissable et de préférence thermodurcissable,
et on continue le procédé avec les étapes (Ab), (Ac), (Ad) et (Ae).

De même, dans une variante avantageuse du procédé (B), on remplace l'étape (Ba) par l'étape (Baa) :
(Baa) on prépare un milieu précurseur en mousse carbonisable à porosité alvéolaire ouverte, telle qu'une mousse de polyuréthane, comportant au moins deux zones ayant une distribution de porosité différente, que l'on imprègne d'une suspension de poudre de silicium dans une résine carbonée durcissable, et de préférence thermodurcissable,
et on continue le procédé avec les étapes (Bb), (Bc) et (Bd).

La demanderesse préfère le deuxième procédé (B), car elle considère qu'il est industriellement plus simple. La mousse polyuréthane peut être remplacée par d'autres mousses polymère organiques présentant une certaine souplesse mécanique, et exempte de certains éléments métalliques provenant des catalyseurs de polymérisation utilisés pour son l'élaboration. On préfère une mousse carbonisable à structure alvéolaire ouverte qui soit compressible, car cela permet une imprégnation plus efficace par un procédé d'imprégnation suivi d'un essorage.

Un des avantages de tous les procédés selon l'invention, et de toutes leurs variantes, est la facilité avec laquelle on peut fabriquer des milieux filtrants d'une forme géométrique souhaitée. Avantageusement, on donne à la pièce en mousse carbonisable après réticulation la forme souhaitée pour être utilisée comme filtre catalytique, ou on usine la mousse en carbone.

La mousse de carbure de silicium mise en oeuvre dans le cadre de la présente invention est constituée de β-SiC, cristallisée dans un système cubique à faces centrées. La demanderesse a constaté qu'une telle mousse montre une conductivité thermique suffisante pour être chauffée aisément en la mettant en contact avec un ou plusieurs moyens extérieurs de chauffage. On peut utiliser comme moyen de chauffage un collier chauffant qui entoure au moins partiellement la mousse, ou une tige chauffante (par exemple un thermo-plongeur) que l'on introduit dans un logement prévu à cet effet dans la mousse. La forte conductivité thermique de ladite mousse de β-SiC permet également d'améliorer le transfert thermique permettant de limiter les points chauds et d'atteindre rapidement un équilibre thermique. Par ailleurs, ladite mousse de carbure de silicium peut montrer dans certain cas une conductivité électrique suffisante pour pouvoir être chauffée directement par le passage d'un courant électrique. Ce moyen intrinsèque de chauffage peut remplacer lesdits moyens extérieurs de chauffage, ou il peut s'y ajouter.

La taille des pores constituant la mousse de β-SiC peut être également variée sur une relativement large gamme afin de réduire au maximum les phénomènes de perte de charge tout en optimisant le pouvoir de combustion catalytique du système. Un autre avantage de la présente invention est la possibilité de fabriquer des pièces de différentes formes pour s'adapter à la place disponible sur la ligne d'échappement. Il est également possible d'utiliser des blocs ainsi catalysés en série et de les chauffer indépendamment. Finalement, il est à noter que la mousse à base de β-SiC présente un excellent compromis entre l'efficacité d'élimination des particules de suie et le poids, ce qui n'est pas le cas des autres systèmes embarqués existants dans le commerce à ce jour.

Dans une réalisation préférée de l'invention, on imprègne la mousse de carbure de silicium de substances chimiques qui agissent comme catalyseur ou qui sont des précurseurs de tels agents, notamment comme catalyseur d'oxydation pour catalyser la combustion des particules de suies passant à travers le dispositif. La source d'oxydant est soit l'oxygène soit le NO ou NOₓ contenu dans les gaz d'échappement à purifier. A titre d'exemple, on peut, selon des techniques connues, imprégner la mousse de β-SiC avec une solution contenant un ou plusieurs composés de platine, rhodium ou palladium ou les combinaisons linéaires ou les alliages desdits métaux, pour former une phase catalytiquement active. La présence d'au moins un de ces métaux permet d'abaisser la température de combustion des suies et de réaliser la combustion en mode continu évitant ainsi l'encrassement du dispositif. Néanmoins, l'utilisation d'un moyen de chauffage externe est toutefois une réalisation préférée de l'invention pour les moteurs diesel. La grande surface spécifique du β-SiC permet de déposer une phase catalytique directement sur sa surface sans avoir recours à un wash-coat additionnel. (On appelle « wash-coat » une couche additionnelle, typiquement en alumine et/ou cérine, de surface spécifique élevée destinée à compenser l'absence d'une surface spécifique suffisamment élevée du support de catalyseur.) Ceci permet un gain de coût de fabrication non négligeable. La concentration de l'agent actif se situe avantageusement entre 0,1% et 2% en masse du support. Dans un mode de réalisation particulier, on choisit une concentration comprise entre 0,2% et 1,5%, et préférentiellement entre 0,2% et 0,5%, afin de limiter le coût du métal précieux.

### c) Dispositifs de filtration catalytique

Un dispositif selon l'invention est un dispositif de cartouche de filtre catalytique comportant un milieu filtrant en mousse de β-SiC ayant une surface spécifique d'au moins 5 m²/g, et au moins une phase active, ladite cartouche étant entourée d'une paroi solide en matériau imperméable aux gaz, et équipée d'au moins deux ouvertures, dont l'une pour l'entrée des gaz à filtrer et l'autre pour la sortie des gaz débarrassés d'au moins une partie de leurs particules solides, ladite cartouche étant caractérisée en ce que ledit milieu filtrant comporte au moins deux zones ayant une porosité différente. De manière préférée, le milieu filtrant contient au moins une pièce en mousse de β-SiC selon l'invention, comme décrit ci-dessus. Il est avantageux que la cartouche contienne au moins deux blocs A' et B' de milieu filtrant ayant une distribution de porosité différente.

Dans une réalisation préférée de l'invention, la zone du milieu filtrant qui est traversée en premier par les gaz d'échappement à filtrer a une taille de porosité plus grande que la zone qui est traversée ensuite.

Ledit gradient peut par exemple être parallèle au sens long du milieu filtrant (gradient longitudinal), ou perpendiculaire au sens long du milieu filtrant (gradient axial), ledit milieu filtrant ayant souvent une forme approximativement cylindrique pour pouvoir être inséré dans un récipient, tel qu'un tube métallique. Par ailleurs, ledit gradient de la porosité en fonction de l'endroit dans le milieu filtrant peut montrer une variation continue ou discontinue de la distribution de porosité. Comme il sera expliqué plus en détail ci-dessous, on peut obtenir, dans le cadre de la présente invention, trois types de variations de la distribution de porosité : a) un gradient à l'intérieur d'un milieu filtrant continu, b) une variation à l'intérieur d'un milieu filtrant continu fabriqué par assemblage d'au moins deux milieux précurseurs, et c) une variation à l'intérieur d'un milieu filtrant discontinu constitué d'au moins deux blocs de milieux filtrants assemblés mécaniquement. Ces trois types de milieux filtrants, caractérisés ici par la forme de la variation de leur distribution de porosité, correspondent à des modes de réalisation différents de la présente invention. Ils peuvent être réalisés à gradient axial ou longitudinal.

Dans un mode de réalisation avantageux de la présente invention, la taille de pores du milieu filtrant montre un gradient. Ce gradient peut être parallèle au sens long de la cartouche, ou perpendiculaire au sens long de ladite cartouche. Il importe que ce gradient et, le cas échéant, l'assemblage des blocs, soit choisi de façon à ce que le flux de gaz d'échappement traverse d'abord une région à grandes tailles de pores, et puis une région à tailles de pores plus faibles. A titre d'exemple, on peut réaliser une bougie qui montre un gradient de porosité, ou on peut assembler le milieu filtrant à partir d'au moins deux blocs de porosité différente.

La demanderesse a trouvé dans le cadre de la présente invention qu'il est possible d'obtenir une mousse de carbure de silicium à porosité variable, et même à gradient de porosité contrôlé, en partant d'une mousse de polyuréthane présentant elle aussi une porosité contrôlée ou un gradient de porosité. Une telle mousse de polyuréthane à porosité contrôlée peut être fabriqué par exemple avec un agent d'expansion, et de préférence un agent d'expansion réactif.

Dans une autre réalisation de l'invention, on réalise un milieu filtrant continu par assemblage d'au moins deux pièces de mousse polyuréthane (milieux précurseurs) de porosité différente, que l'on soumet ensuite aux réactions chimique à haute température pour fabriquer un bloc de mousse de carbure de silicium possédant des zones qui montrent la taille de porosité voulue.

Dans le même but, on peut également assembler le milieu filtrant à partir de blocs de mousse de SiC de porosité différente ; il s'agit dans ce cas d'un milieu filtrant discontinu. La mousse de SiC mise en oeuvre dans le cadre de la présente invention, ainsi que les milieux précurseurs de ladite mousse de SiC, peuvent être facilement mis en forme, par exemple par usinage ou découpe, pour leur conférer aisément une forme telle qu'elle remplit tout le volume souhaité de la cartouche. La mise en forme par sciage, usinage ou perçage peut être effectuée de manière avantageuse sur une mousse trempée dans de l'eau froide et congelée. Cette facilité de mise en forme est un avantage significatif par rapport aux milieux filtrants habituellement utilisés dans des dispositifs de filtre à particules pour la purification de gaz d'échappement des moteurs à combustion.

La bougie peut comporter une peau de SiC plus compacte, comme décrit dans le brevet US 5,958,831, pour améliorer la résistance à l'écrasement de la bougie. De manière beaucoup plus simple, on peut obtenir une peau de SiC plus compacte et plus dense en mettant après imprégnation la surface du milieu précurseur en contrainte, par exemple en l'insérant dans un moule de dimension légèrement inférieure, et on durcit sous contrainte.

On peut également préparer une bougie à gradient concentrique, c'est-à-dire à gradient perpendiculaire au sens long, à partir d'une pièce en mousse de polyuréthane formée par enroulement de feuilles en mousse de polyuréthane.

Dans un mode de réalisation avantageux, on réalise une bougie comportant trois zones de porosité différente : la première a une ouverture de pores comprise entre environ 1500 et 1900 µm, la seconde une ouverture de pores comprise entre environ 1000 et 1400 µm, et la troisième une ouverture de pores comprise entre environ 850 et 975 µm. La phase active peut être du platine.

Dans un autre mode de réalisation avantageux, on réalise une bougie comportant deux mousses, une première mousse à taille d'alvéoles importante avec une phase active de platine en concentration assez élevée (i.e. typiquement proche de 2%), suivie d'une deuxième mousse à taille d'alvéoles plus serrée comportant une charge de platine plus faible. Dans un tel dispositif, le premier étage du filtre catalytique transforme le NO en NO₂ mais ne retient pas une quantité significative de suie, alors que le deuxième étage du filtre catalytique retient la suie qui est brûlée par le NO₂.

Dans encore un autre mode de réalisation avantageux, la mousse du deuxième étage est chargée de Pt + Rh (par exemple dans une proportion de 2/3 : 1/3).

### d) Utilisation du dispositif

Comme indiqué ci-dessus, la mousse de carbure de silicium mise en oeuvre dans le cadre de la présente invention est constituée de β-SiC. La demanderesse a constaté qu'une telle mousse montre une conductivité thermique suffisante pour pouvoir être chauffée aisément en la mettant en contact avec un ou plusieurs moyens extérieurs de chauffage. On peut utiliser comme moyen de chauffage un collier chauffant qui entoure au moins partiellement la cartouche, ou une tige chauffante (thermoplongeur) que l'on introduit dans un logement prévu à cet effet dans la cartouche. Un autre moyen extérieur de chauffage qui peut être utilisé dans le cadre de la présente invention est le chauffage par micro-ondes.

Ainsi, on peut brûler de façon périodique ou continue les particules retenues par le filtre.

Dans une réalisation préférée de l'invention, on imprègne la mousse de carbure de silicium de substances chimiques qui agissent comme catalyseur, notamment comme catalyseur d'oxydation pour catalyser la combustion des particules retenues. A titre d'exemple, on peut, selon des techniques connues, imprégner la mousse de SiC avec une phase active contenant au moins un des éléments platine, rhodium ou palladium. Une telle cartouche imprégnée peut se régénérer même sans utilisation d'un moyen de chauffage, si la température des gaz d'échappement qui la traversent est suffisamment élevée. Une température d'équilibre avantageuse se situe aux alentours de 300°C. L'utilisation d'un moyen de chauffage est toutefois une réalisation préférée de l'invention pour les moteurs diesel.

Le dispositif de filtre selon l'invention peut être monté sur tous les types de moteurs à combustion, et notamment sur tous les moteurs utilisant des carburants liquides. Une utilisation avantageuse dudit dispositif est l'utilisation comme filtre des gaz d'échappement d'un moteur diesel. Ledit dispositif peut comprendre une, deux, trois, ou encore plus de voies, dont chacune est équipée d'une cartouche. Dans un mode de réalisation, les cartouches d'une des ces voies peuvent être en mode régénération, c'est-à-dire que l'on introduit de l'air dans la cartouche chaude pour brûler les particules, pendant qu'au moins une autre cartouche filtre les gaz d'échappement.

Dans un autre mode de réalisation, on brûle les particules filtrées de façon continue lors de la filtration, soit en utilisant un milieu filtrant en mousse de β-SiC imprégné d'un catalyseur approprié, soit par injection périodique ou continue d'un catalyseur ou précurseur de catalyseur dans le carburant. Cependant, un grand avantage du dispositif selon l'invention est que, pouvant fonctionner en mode continu à une température relativement basse, et ne dépassant normalement pas 500°C ou même 400°C, le filtre catalytique se régénère pratiquement en permanence, ce qui évite l'augmentation rédhibitoire de la perte de charge sur la ligne d'échappement. Avantageusement, la température est comprise entre 200°C et 500°C, préférentiellement entre 220°C et 400°C, et encore plus préférentiellement entre 240°C et 380°C. Ainsi, il est possible d'utiliser un dispositif à une seule voie, ce qui simplifie le dispositif, et on n'a pas besoin de gérer des phénomènes discontinus (tel que l'injection de catalyseur dans le carburant). Tout au plus, il peut être utile de chauffer le dispositif lorsqu'il est froid, notamment au démarrage du moteur, ce qui peut se faire dans le dispositif selon l'invention de manière très simple, par exemple par micro-ondes ou par effet Joule ; la bonne conductivité thermique du β-SiC aide à l'installation rapide d'un équilibre thermique en cas de changement de température.

### e) Avantages de l'invention

L'invention présente de nombreux avantages.
L'utilisation d'une mousse en β-SiC présente les avantages suivants : La fabrication de pièces de forme en mousse de SiC (bougies ou blocs) met en oeuvre des matières premières peu coûteuses. Il n'est pas nécessaire d'extruder une pièce en nid d'abeille. Les pièces en mousse de SiC obtenues, ainsi que leur précurseurs, sont usinables. On peut fabriquer facilement des pièces de différentes formes pour s'adapter à la place disponible sur la ligne d'échappement. La conductivité thermique du β-SiC obtenue est bonne et évite la formation de points chauds ; elle facilite le chauffage:

Un autre avantage de l'invention est que la phase active peut être déposée directement sur le β-SiC sans avoir recours à un wash-coat additionnel, ce qui procure un gain en coût de fabrication et facilite le recyclage de la phase active. La mousse de β-SiC utilisée dans le cadre de la présente invention présente une surface spécifique suffisante (d'au moins 5 m²/g, préférentiellement d'au moins 7 m²/g et encore plus d'au moins 10 m²/g) pour pouvoir être utilisée comme support pour un catalyseur, alors que dans les dispositifs connus en α-SiC, la surface spécifique est trop faible et doit être augmentée par le dépôt d'un wash-coat contenant de la poudre d'alumine.

Encore un autre avantage de l'invention est le faible coût de fabrication d'une mousse en β-SiC, qui est notamment inférieur à celui d'un monolithe en α-SiC selon l'état de la technique du fait d'une température de synthèse nettement plus basse (environ 1400 °C dans le procédé selon l'invention, comparé avec environ 1700 - 2300°C pour les procédés connus).

L'utilisation d'une mousse alvéolaire à porosité ouverte présente en plus les avantages suivants : La perte de charge varie peu lorsque le filtre s'encrasse ; on peut optimiser la structure poreuse pour maximiser le rapport efficacité de filtration / perte de charge en utilisant une porosité variable et bien maîtrisée entre l'entrée et la sortie du filtre.

Le dispositif selon l'invention a de nombreux avantages techniques et économiques par rapport aux dispositifs selon l'art antérieur, et notamment par rapport aux dispositifs existants à cartouche céramique. Lorsque lesdites pièces en mousse de β-SiC comportent une peau en surface, elle peuvent être manipulées aisément et résistent aux conditions opératoires hostiles, telles que les vibrations, les chocs thermiques, les chocs mécaniques, qu'entraîne leur utilisation, notamment dans les véhicules de tourisme ou industriels, les engins de bâtiment ou agricoles, les locomotives et navires.

Le dispositif selon la présente invention montre une durée de vie très longue. Le recyclage des blocs de mousse de SiC peut se faire facilement : le catalyseur métallique est récupéré par lavage avec une acide approprié, et la mousse de SiC restante peut être broyée ; la poudre ainsi obtenue peut être utilisée dans certaines applications de céramique industrielle connues de l'homme du métier.

Le dispositif de filtre selon l'invention peut être monté sur tous les types de moteurs à combustion, notamment sur tous les moteurs utilisant des carburants liquides, et plus spécialement sur les moteurs de type Diesel.

Les exemples qui suivent illustrent l'invention et n'ont pas de caractère limitatif.

### Exemples

### Exemple 1 : Procédé de préparation de la phase active du catalyseur pour dépôt sur une mousse de β-SiC

Cet exemple illustre de manière détaillée la préparation d'un catalyseur permettant de brûler les suies issues d'un moteur diesel.

On prépare un mélange homogène constitué d'une suspension de 810 g de poudre de silicium dans 1000 g de résine phénolique. Une mousse polyuréthane à base de polyester de porosité moyenne de 1200 µm est imprégnée de ce mélange en quantité égale à environ 20 fois sa propre masse. La pièce obtenue est ensuite durcie par un traitement sous air à 150°C pendant 3 heures, puis traitée à 1360°C pendant une heure sous flux d'argon afin de former la phase β-SiC. Enfin, le carbone résiduel est éliminé par chauffage de la mousse sous air à 700°C pendant 3 heures.

La pièce ainsi obtenue présente une porosité alvéolaire (macroscopique) moyenne d'environ 1500 µm, soit une augmentation d'environ 25% par rapport à la taille de la mousse initiale. Cette porosité alvéolaire est complétée par une porosité additionnelle comprise entre 10 et 100 nm représentant un volume mésoporeux de 0,2 ml/g et une surface spécifique de 10 m²/g.

A partir d'un morceau de cette pièce, on prépare un catalyseur à base de platine avec une teneur en Pt de 0,5 % par rapport à la massé du support en mousse de carbure de silicium β-SiC). La méthode utilisée est l'imprégnation du volume poreux, suivant la technique connue de l'homme du métier. On découpe dans la mousse de β-SiC ayant une ouverture de pores de 1500 µm, un morceau ayant les dimensions suivantes : 1,5 cm d'épaisseur et 5 cm de diamètre, et pesant 7,53 g. L'imprégnation consiste à dissoudre 0,0645 g du sel précurseur contenant la phase active, (NH₃)₄Pt(Cl)₂.H₂O, dans 15 mL d'eau distillée. Dans un premier temps, on procède au mouillage du support en versant goutte à goutte la moitié de la solution de sel précurseur c'est-à-dire 7 mL sur le côté face de la mousse. Cette dernière opération est arrêtée lorsque le support arrive à saturation. La mousse est ensuite séchée à l'air ambiant 12 heures. Dans un second temps, la mousse est retournée afin de réaliser le goutte à goutte du reste de la solution de sel précurseur sur le côté pile de la mousse. Cette dernière est par la suite séchée à température ambiante.

Après séchage à l'étuve à 100°C pendant 12 heures, le solide est ensuite calciné sous air à 400°C pendant 2 heures afin de décomposer le sel précurseur. Aucune réduction sous hydrogène n'a été pratiquée. Le catalyseur est ainsi prêt. Il a été utilisé pour réaliser en mode continu la combustion catalytique des suies à une température inférieure à 500°C.

### Exemple 2 : Utilisation d'un catalyseur préparé selon l'exemple 1 dans une étude modèle de combustion de suie.

Cet exemple décrit les résultats obtenus lors de la combustion d'une suie modèle sur un filtre catalytique constitué par une mousse de β-SiC ayant une ouverture de pores de 3600 µm et une phase active contenant 0,5 % en masse de platine. Le filtre catalytique est de forme cylindrique et a les dimensions suivantes : 30 mm de diamètre et 20 mm de longueur. Sa masse était de 1,44 g. Sa surface spécifique était de l'ordre de 10 m²/g.

Après imprégnation et traitement thermique (comme décrit lors de l'exemple 1), le filtre catalytique est imprégné avec 5 % en masse de suie sèche (Printex U, Degussa) par immersion dans une solution d'éthanol contenant la suie en suspension. Le système filtre catalytique et suie est ensuite inséré dans un réacteur tubulaire en quartz (diamètre interne, 30 mm, longueur, 800 mm) faisant partie d'un montage destiné à évaluer la capacité du filtre catalytique à brûler la suie déposée en fonction de la température du réacteur. Afin de simuler les conditions de fonctionnement réel, le test est effectué en isotherme pendant 6 heures à 300°C. La température de 300°C a été choisie sachant que la température typique des gaz sortant d'un moteur diesel est supérieure à 275°C plus de 60% du temps lors d'un fonctionnement typique, et oscille pendant une durée significative du fonctionnement entre 300 et 400°C ; cela ressort de l'article « Performance and Durability Evaluation of Continuously Regenerating Particulate Filters on Diesel Powered Urban Buses at NY City Transport » par T. Lanni et al., publication SAE (Sociéty of Automotive Engineers) n° 2001-01-0511. Lors de l'expérience, le système est balayé par un flux gazeux contenant de l'oxygène (10 % en volume), du NO (1000 ppm en volume) et de l'hélium comme gaz vecteur pour un total de 100 cm³/min. Ce mélange gazeux est représentatif des gaz d'échappements sortant d'un moteur diesel.

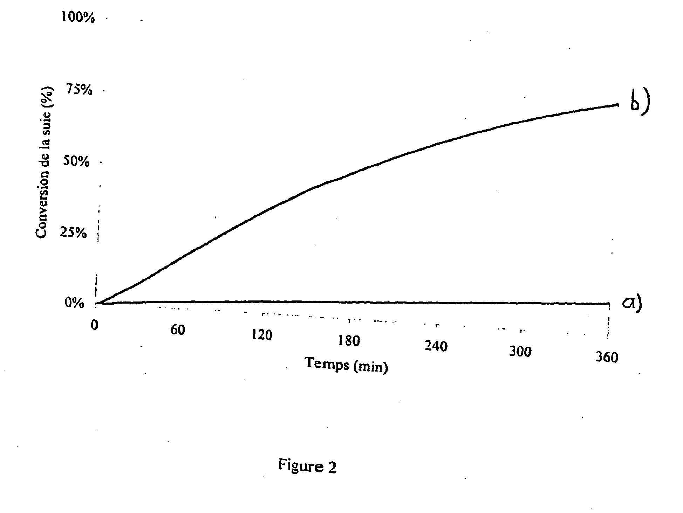

Les résultats obtenus sont présentés sur la Figure 2. Comme nous pouvons le constater, la présence du catalyseur a permis d'augmenter de manière significative l'élimination de la suie par combustion. En effet, la vitesse de combustion de la suie est multipliée par un facteur 26 : 10,4 mg de suie / h pour la combustion catalytique de la suie et 0,4 mg de suie / h pour la combustion non catalytique de la suie. Les résultats montrent qu'il est possible de réaliser la combustion catalytique de la suie sur une mousse de β-SiC imprégnée de Pt.

### Exemple 3 : Utilisation de mousses en carbure de silicium (β-SiC) avec des porosités variables catalysées au Pt obtenues d'après l'exemple 1 pour la combustion des particules de suies dans les gaz d'échappements issus d'un moteur diesel.

Cet exemple illustre l'emploi d'un filtre catalytique constitué de deux mousses de tailles de pores alvéolaires différentes dans la dépollution des gaz d'échappement issus d'un moteur diesel. L'objectif est d'utiliser deux mousses imprégnées de Pt dont on module la taille des pores afin de brûler les particules de suie issues d'un moteur diesel. Pour cela, nous avons préparé deux mousses (surface spécifique environ 10 m²/g) ayant des ouvertures de pores alvéolaires différentes et montées en alternance par rapport à l'entrée des gaz d'échappement dans le dispositif de filtre catalytique: la première de 2400 µm, la deuxième de 1500 µm. Toutes les deux sont catalysées avec 0,5 % en masse de platine suivant la méthode décrite dans l'exemple 1.

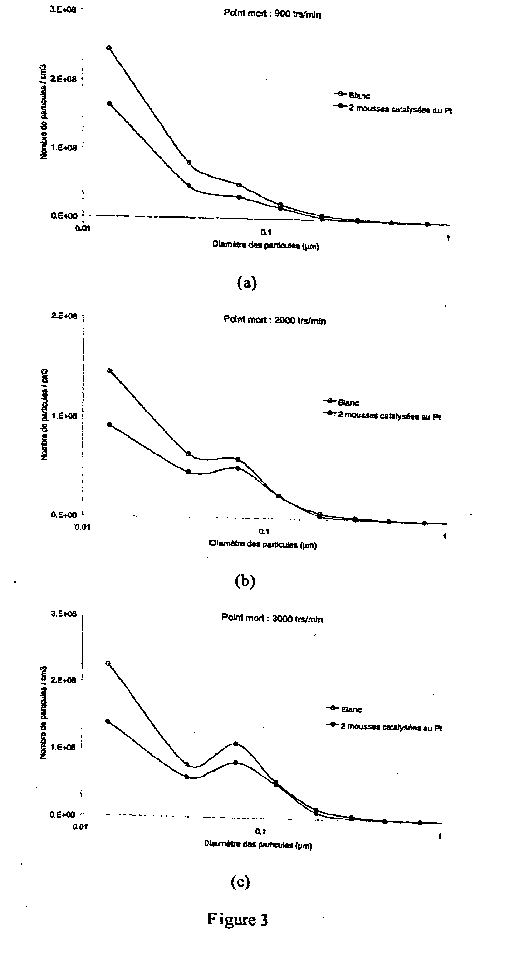

Le volume de ces 2 mousses représente 60 mL. Ce système filtrant est ensuite placé à la sortie de la ligne d'échappement d'une Peugeot 206 1,4 L HDI (modèle de l'année 2001) disposée sur un banc à rouleaux. Les tests se déroulent pendant 10 minutes, la voiture fonctionne au point mort et sous différents régimes : 900, 2000 ou 3000 tours par minute. Le système filtrant est chauffé par l'intermédiaire d'un collier chauffant à 250°C. Le prélèvement des gaz d'échappement se fait en aval du dispositif filtrant et est réalisé par le FPS (Fine Particle Sampler) fabriqué par Dekati. Cet appareil permet de diluer et d'amener les gaz d'échappement à l'analyseur de particules qui est un impacteur fabriqué par l'entreprise Dekati et de type «ELPI» (Electrical Low Pressure Impactor). Afin de comparer les résultats, un test blanc est réalisé sans mettre de système filtrant à l'échappement. Les résultats obtenus avec le dispositif filtrant catalytique à base de β-SiC sont montrés sur la Figure 3 et comparés avec le test blanc. Les distributions en nombre en fonction de la taille des particules obtenues pour le test blanc et pour le test réalisé avec le système filtrant catalytique montre bien l'efficacité dudit système dans la filtration-combustion des particules de suies sortant du moteur. Ce dernier permet en effet de diminuer le nombre de particules émises. Il est ainsi possible de moduler la taille des pores des mousses dans le système filtrant catalytique afin d'avoir une perte de charge minimum et une efficacité d'élimination des particules maximum. Il convient de noter que dans cet essai, le volume du milieu filtrant était très faible par rapport à celui d'une cartouche selon l'invention qui serait utilisée industriellement sur le même véhicule.

### Exemple 4 : Utilisation de mousses en carbure de silicium (β-SiC) avec des porosités variables catalysées au Pt obtenues d'après l'exemple 1 pour la combustion des particules de suies dans les gaz d'échappement issus d'un moteur diesel.

Cet exemple illustre l'emploi d'un filtre catalytique constitué de trois mousses de tailles de pores différentes dans la dépollution des gaz d'échappement issus d'un moteur diesel. L'objectif est d'utiliser trois mousses imprégnées de Pt afin de brûler les particules de suies issues d'un moteur diesel. Pour cela, on a préparé trois mousses ayant des ouvertures de pores alvéolaires différentes qu'on a disposées l'une après l'autre dans le système catalytique, dans un ordre décroissant suivant la taille des pores = la première de 1750 µm, la deuxième de 1100 µm et la troisième de 920 µm. Toutes les trois sont catalysées avec 2% en masse de platine suivant la méthode décrite dans l'exemple 1.

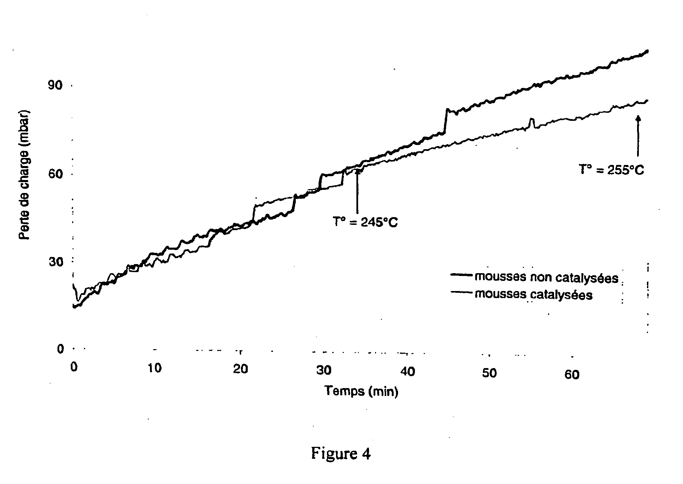

Le volume de ces trois mousses représente 275 mL. Le système filtrant est calorifugé et placé en sortie du pot d'oxydation d'une Peugeot 206 1.4 L HDI (modèle de l'année 2001) disposée sur un banc à rouleaux. Les tests se déroulent comme décrit ci-dessous :
➢ Phase de préchauffage.
➢ Phase 1 : 70 minutes en vitesse 2 à en moyenne 2250 trs/min, avec une charge de 60 N.m.
Le prélèvement des gaz d'échappement se fait alternativement en aval et en amont du dispositif filtrant, afin de mieux évaluer la capacité du système à éliminer les particules. Le prélèvement se fait grâce au FPS (Fine Particle Sampler) fabriqué par Dekati. Cet appareil permet de diluer et d'amener les gaz d'échappement à l'analyseur de particules qui est un impacteur fabriqué par Dekati et de type "ELPI" (Electrical Low Pressure Impactor). Dans ces conditions, la température se stabilise à 245-255°C sur les 30 dernières minutes du test. La figure 4 présente l'évolution de la perte de charge en fonction du temps au cours de la phase 1 pour les deux systèmes (catalysé ou non). Elle montre que l'augmentation de la perte de charge avec le temps de fonctionnement est plus lente lorsque le système filtrant est catalysé au platine. Une différence de 10 mbar en fin de test est observée entre des mousses catalysées et non catalysées (figure 4).

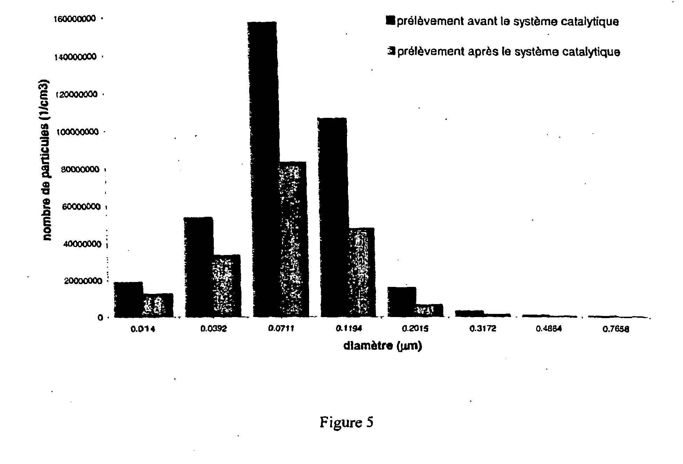

De plus, les distributions en nombre en fonction de la taille des particules obtenues pour des prélèvements amont et aval (Figure 5) montrent une efficacité globale de 50% dans la filtration-combustion des particules de suies sortant du moteur.

### Exemple 5 : Utilisation de mousses en carbure de silicium (β-SiC) avec des porosités variables catalysées au Pt obtenues d'après l'exemple 1 pour la combustion des particules de suies dans les gaz d'échappement issus d'un moteur diesel

On reproduit l'exemple n° 4 mais en chauffant les gaz à 265°C en amont du système filtrant. La différence de perte de charge entre les systèmes catalysés et non catalysés est alors de 25 mbar en fin d'essai, et l'efficacité globale d'élimination de particules (mesurée par l'ELPI) est de 63% pour le système catalysé.

### Exemple 6 (exemple comparatif) : Utilisation de mousses en carbure de silicium (β-SiC) avec une porosité homogène catalysées au Pt obtenues d'après l'exemple 1 pour la combustion des particules de suies dans les gaz d'échappement issus d'un moteur diesel.

On reproduit l'exemple n°5 mais en remplaçant les 3 mousses catalysées de tailles sucessives de 1750 µm, 1100 µm et 920 µm, par trois mousses catalysées identiques de taille 1100 µm. L'efficacité globale d'élimination des particules (mesurée par l'ELPI) n'est que de 48% pour une perte de charge similaire à celle de l'exemple 5.

## Revendications

1. Procédé de fabrication d'un milieu filtrant en mousse de β-SiC présentant une surface spécifique d'au moins 5 m²/g et comportant au moins deux zones ayant une distribution de porosité différente, ledit procédé comportant les étapes suivantes :
a) on prépare un milieu précurseur en mousse carbonisable à porosité alvéolaire ouverte, telle qu'une mousse de polyuréthane, comportant au moins deux zones ayant une distribution de porosité différente, que l'on imprègne d'une résine durcissable,
b) on réticule ladite résine,
c) on pyrolyse ladite mousse pour former une mousse de carbone,
d) on active ladite mousse en carbone en la chauffant sous balayage de CO₂ à une température comprise entre 700 °C et 1000°C,
e) on expose ladite mousse en carbone activée à une vapeur de SiO pour former une mousse en carbure de silicium.

2. Procédé de fabrication d'un milieu filtrant en mousse de β-SiC présentant une surface spécifique d'au moins 5 m²/g et comportant au moins deux zones ayant une distribution de porosité différente, ledit procédé comportant les étapes suivantes :
a) on prépare un milieu précurseur en mousse carbonisable à porosité alvéolaire ouverte, telle qu'une mousse de polyuréthane, comportant au moins deux zones ayant une distribution de porosité différente, que l'on imprègne d'une suspension de poudre de silicium dans une résine durcissable,
b) on réticule ladite résine,
c) on carbonise la mousse carbonisable et la résine, et on siliciure le carbone ainsi formé par augmentation progressive de la température jusqu'à une température ne dépassant pas 1600 °C.

3. Procédé, selon la revendication 1 ou 2, dans lequel on élimine après l'étape e) du procédé selon la revendication 1 ou après l'étape c) du procédé selon la revendication 2 le carbone résiduel par oxydation du produit à une température comprise entre 650 °C et 950 °C.

4. Procédé selon une quelconque des revendications 1 à 3, **caractérisé en ce que** ladite résine durcissable est une résine thermodurcissable, et **en ce que** sa réticulation est effectuée par augmentation progressive de la température.

5. Procédé selon une quelconque des revendications 1 à 3, **caractérisé en ce que** ladite résine durcissable est une résine photodurcissable.

6. Procédé selon une quelconque des revendications 2 à 5, **caractérisé en ce que** la température à l'étape c) de la revendication 2 est comprise entre 1200°C et 1400°C.

7. Procédé selon une quelconque des revendications 2 à 6, **caractérisé en ce que** ledit milieu précurseur présente un gradient de porosité, et/ou est assemblé à partir d'au moins deux blocs ayant une distribution de porosité différente.

8. Procédé selon une quelconque des revendications 1 à 7, **caractérisé en ce que** ledit milieu filtrant présente une surface spécifique d'au moins 7 m²/g, préférentiellement d'au moins 10 m²/g, et encore plus préférentiellement comprise entre 10 et 20 m²/g.

9. Procédé selon une quelconque des revendications 4 ou 6 à 8, **caractérisé en ce que** ladite résine thermodurcissable est une résine furfurylique, une résine phénolique ou une résine polyuréthane, ou un mélange de ces types de résines.

10. Procédé selon une quelconque des revendications 1 à 9, **caractérisé en ce qu'**une phase catalytiquement active est déposée sur ledit milieu filtrant par imprégnation.

11. Procédé selon la revendication 10, **caractérisé en ce que** ladite phase catalytiquement active contient du rhodium, du platine, du palladium, ou une combinaison de ces éléments.

12. Procédé selon une quelconque des revendications 1 à 11, **caractérisé en ce qu'**après l'imprégnation de ladite résine durcissable, ladite mousse carbonisable à structure alvéolaire ouverte est durcie sous contrainte de manière à former une peau plus dense en surface dudit milieu filtrant en mousse de β-SiC.

13. Procédé selon une quelconque des revendications 1 à 12, **caractérisé en ce que** ledit milieu filtrant obtenu est imprégné d'eau, congelé et mis en forme par sciage, perçage et / ou usinage.

14. Pièce en mousse de β-SiC ayant une surface spécifique d'au moins 5 m²/g et présentant au moins deux zones A et B ayant une distribution de porosité différente, **caractérisée en ce que** ladite pièce a été fabriquée par transformation chimique d'un milieu précurseur poreux constitué d'au moins deux blocs A' et B' ayant une distribution de porosité différente, et **en ce que** lesdites au moins deux zones A et B sont issues de ladite transformation chimique desdits au moins deux blocs A' et B'.

15. Pièce en mousse de β-SiC selon la revendication 14, **caractérisée en ce que** ladite mousse a une taille moyenne de pores comprise entre 500 µm et 4000 µm, qui est préférentiellement d'au moins 800 µm, et qui est préférentiellement comprise entre 900 µm et 3000 µm, et encore plus préférentiellement entre 900 µm et 1800 µm.

16. Pièce en mousse de β-SiC selon une quelconque des revendications 14 ou 15, **caractérisée en ce que** sa densité est comprise entre 0,05 et 0,5 g/cm³, et préférentiellement entre 0,1 et 0,2 g/cm³.

17. Pièce en mousse de β-SiC, **caractérisée en ce qu'**elle a été, fabriquée par un procédé selon une quelconque des revendications 1 à 13.

18. Pièce en mousse de β-SiC selon la revendication 17, **caractérisée en ce qu'**elle comporte une phase catalytiquement active contenant du rhodium, du platine, du platine, ou une combinaison de ces éléments.

19. Dispositif de cartouche de filtre catalytique comportant un milieu filtrant en mousse de β-SiC ayant une surface spécifique d'au moins 5 m²/g, et au moins une phase active, ladite cartouche état entourée d'une paroi solide en matériau imperméable aux gaz, et équipée d'au moins deux ouvertures, dont l'une pour l'entrée des gaz à filtrer et l'autre pour la sortie des gaz débarrassés d'au moins une partie de leurs particules solides,
ladite cartouche étant **caractérisée en ce que** ledit milieu filtrant comporte au moins deux zones ayant une porosité différente.

20. Dispositif selon la revendication 19, **caractérisé en ce que** ladite cartouche contient au moins deux blocs A' et B' de milieu filtrant ayant une distribution de porosité différente.

21. Dispositif selon la revendication 19 ou 20, **caractérisée en ce que** ledit milieu filtrant comporte au moins une pièce en mousse de β-SiC selon une quelconque des revendications 14 à 18.

22. Dispositif selon une des revendications 19 à 21, **caractérisé en ce que** le ou les blocs constituants le filtre catalytique ont été activés par dépôt d'au moins un agent actif à effet catalytique.

23. Dispositif selon la revendication 19 à 22, **caractérisé en ce que** ledit agent actif est constitué par au moins un élément sélectionné dans le groupe constitué par Pt, Pd, Rh.

24. Dispositif selon la revendication 23, **caractérisé en ce que** la concentration de l'agent actif se situe entre 0,1 et 2 % en masse du support, préférentiellement entre 0,2 et 1,5 % en masse et spécialement entre 0,2 et 0,5 %.

25. Dispositif selon une quelconque des revendications 19 à 24, **caractérisé en ce qu'**il comporte au moins un moyen chauffant.

26. Dispositif selon la revendication 25, **caractérisé en ce qu'**au moins un des moyens chauffants est disposé à l'extérieur et/ou inséré à l'intérieur dudit dispositif.

27. Dispositif selon la revendication 26, **caractérisé en ce qu'**au moins un des moyens chauffants est l'échauffement causé par le passage d'un courant électrique à travers au moins une partie dudit dispositif.

28. Dispositif selon la revendication 25, **caractérisé en ce qu'**au moins un des moyens de chauffage est le chauffage par micro-ondes.

29. Dispositif selon une des revendications 25 à 28, **caractérisé en ce qu'**il est chauffé à une température inférieure ou égale à 500 °C pendant toute sa durée de fonctionnement ou pendant certaines phases de son fonctionnement.

30. Dispositif selon la revendication 29, **caractérisé en ce que** la température est comprise entre 200 et 500°C, préférentiellement entre 220 et 400°C, et encore plus préférentiellement entre 240 et 480°C.

31. Dispositif selon l'une des revendications 19 à 30, **caractérisé en ce que** ledit milieu est obtenu par assemblage de deux ou plusieurs blocs de milieu filtrant, dont au moins deux ont une distribution de porosité différente.

32. Utilisation d'un dispositif selon l'une quelconque des revendications 19 à 31 pour l'élimination au moins partielle des particules de suies présentes dans les gaz d'échappement d'un moteur diesel.

## Claims

1. Method for manufacturing a β-SiC foam filtering medium displaying a specific surface area of at least 5 m²/g and comprising at least two zones having a different porosity distribution, said method comprising the following steps:
a) a precursor medium is prepared, consisting of open-cell porosity carbonisable foam, such as a polyurethane foam, comprising at least two zones having a different porosity distribution, which are impregnated with a settable resin,
b) said resin is cross-linked,
c) said foam is pyrolysed to form a carbon foam,
d) said carbon foam is activated by heating it under CO₂ scavenging at a temperature between 700°C and 1000°C,
e) said activated carbon foam is exposed to an SiO vapour to form a silicon carbide foam.

2. Method for manufacturing a β-SiC foam filtering medium displaying a specific surface area of at least 5 m²/g and comprising at least two zones having a different porosity distribution, said method comprising the following steps:
a) a precursor medium is prepared, consisting of open-cell porosity carbonisable foam, such as a polyurethane foam, comprising at least two zones having a different porosity distribution, which are impregnated with a settable resin,
b) said resin is cross-linked,
c) the carbonisable foam and the resin are carbonised and the carbon formed in this way is silicided by progressively increasing the temperature up to a temperature not exceeding 1600°C.

3. Method according to claim 1 or 2, wherein, after step e) of the method according to claim 1 or after step c) of the method according to claim 2, the residual carbon is removed by oxidising the product at a temperature between 650°C and 950°C.

4. Method according to any of claims 1 to 3, **characterised in that** said settable resin is a thermosettable resin, and **in that** the cross-linking thereof is performed by progressively increasing the temperature.

5. Method according to any of claims 1 to 3, **characterised in that** said settable resin is a photosettable resin.

6. Method according to any of claims 2 to 5, **characterised in that** the temperature in step c) of claim 2 is between 1200°C and 1400°C.

7. Method according to any of claims 2 to 6, **characterised in that** said precursor medium displays a porosity gradient, and/or is assembled from at least two blocks having a different porosity distribution.

8. Method according to any of claims 1 to 7, **characterised in that** said filtering medium displays a specific surface area of at least 7 m²/g, preferably at least 10 m²/g, and more preferably between 10 and 20 m²/g.

9. Method according to any of claims 4 or 6 to 8, **characterised in that** said thermosettable resin is a furfurylic resin, a phenolic resin or a polyurethane resin, or a mixture of these types of resins.

10. Method according to any of claims 1 to 9, **characterised in that** a catalytically active phase is deposited on said filtering medium by means of impregnation.

11. Method according to claim 10, **characterised in that** said catalytically active phase contains rhodium, platinum, palladium, or a combination of these elements.

12. Method according to any of claims 1 to 11, **characterised in that**, after the impregnation of said settable resin, said open-cell structure carbonisable foam is set under stress so as to form a denser skin on the surface of said β-SiC foam filtering medium.

13. Method according to any of claims 1 to 12, **characterised in that** said filtering medium obtained is impregnated with water, frozen and shaped by means of sawing, drilling and/or machining.

14. Piece made of β-SiC foam having a specific surface area of at least 5 m²/g and displaying at least two zones A and B having a different porosity distribution, **characterised in that** said piece was manufactured by means of chemical transformation of a porous precursor medium consisting of at least two blocks A' and B' having a different porosity distribution, and **in that** said at least two zones A and B are obtained from said chemical transformation of said at least two blocks A' and B'.

15. Piece made of β-SiC foam according to claim 14, **characterised in that** said foam has a mean pore size between 500 µm and 4000 µm, which is preferably at least 800 µm, and which is preferably between 900 µm and 3000 µm, and more preferably between 900 µm and 1800 µm.

16. Piece made of β-SiC foam according to any of claims 14 or 15, **characterised in that** the density thereof is between 0.05 and 0.5 g/cm³, and preferably between 0.1 and 0.2 g/cm³.

17. Piece made of β-SiC foam, **characterised in that** it was manufactured by means of a method according to any of claims 1 to 13.

18. Piece made of β-SiC foam according to claim 17, **characterised in that** it comprises a catalytically active phase containing rhodium, platinum, palladium, or a combination of these elements.

19. Catalytic filter cartridge device comprising a filtering medium made of β-SiC foam having a specific surface area of at least 5 m²/g, and at least one active phase, said cartridge being enclosed with a solid wall made of gas-tight material, and equipped with at least two openings, including one for the inlet of the gases to be filtered and the other of the outlet of the gases from which at least some of the solid particles thereof have been extracted,
said cartridge being **characterised in that** said filtering medium comprises at least two zones having a different porosity.

20. Device according to claim 19, **characterised in that** said cartridge contains at least two blocks A' and B' of the filtering medium having a different porosity distribution.

21. Device according to claim 19 or 20, **characterised in that** said filtering medium comprises at least one piece made of β-SiC foam according to any of claims 14 to 18.

22. Device according to any of claims 19 to 21, **characterised in that** the block(s) forming the catalytic filter have been activated by means of the deposition of at least one active agent with a catalytic effect.

23. Device according to claim 19 to 22, **characterised in that** said active agent consists of at least one element selected in the group consisting of Pt, Pd, Rh.

24. Device according to claim 23, **characterised in that** the active agent concentration is between 0.1 and 2% by weight of the substrate, preferably between 0.2 and 1.5% by weight and especially between 0.2 and 0.5%.

25. Device according to any of claims 19 to 24, **characterised in that** it comprises at least one heating means.

26. Device according to claim 25, **characterised in that** at least one of the heating means is arranged outside and/or inserted inside said device.

27. Device according to claim 26, **characterised in that** at least one of the heating means is the temperature rise caused by the flow of an electrical current through at least part of said device.

28. Device according to claim 25, **characterised in that** at least one of the heating means is microwave heating.

29. Device according to any of claims 25 to 28, **characterised in that** it is heated to a temperature less than or equal to 500°C throughout the operation thereof or during some phases of the operation thereof.

30. Device according to claim 29, **characterised in that** the temperature is between 200 and 500°C, preferably between 220 and 400°C, and more preferably between 240 and 480°C.

31. Device according to any of claims 19 to 30, **characterised in that** said medium is obtained by assembling two or more blocks of filtering medium, wherein at least two have a different porosity distribution.

32. Use of a device according to any of claims 19 to 31 for the at least partial removal of soot particles present in diesel engine exhaust gases.

## Patentansprüche

1. Verfahren zur Herstellung eines Filtermediums aus β-SiC-Schaum, welches eine spezifische Oberfläche von mindestens 5 m²/g aufweist und mindestens zwei Bereiche mit unterschiedlicher Porositätsverteilung umfasst, wobei das Verfahren folgende Schritte aufweist:
a) es wird ein Vorläufermaterial aus karbonisierbarem Schaum mit offener Zellen porosität hergestellt, wie z.B. Polyurethanschaum, welches mindestens zwei Bereiche mit unterschiedlicher Porositätsverteilung umfasst, die mit aushärtendem Harz imprägniert werden,
b) das Harz wird vernetzt,
c) der Schaum wird pyrolysiert, um Kohlenstoffschaum zu bilden,
d) der Kohlenstoffschaum wird aktiviert, indem er unter CO₂-Spülung auf eine Temperatur zwischen 700°C und 1000°C erhitzt wird,
e) der aktivierte Kohlenstoffschaum wird SiO-Dampf ausgesetzt, um Siliziumkarbidschaum zu bilden.

2. Verfahren zur Herstellung eines Filtermediums aus β-SiC-Schaum, welches eine spezifische Oberfläche von mindestens 5 m²/g aufweist und mindestens zwei Bereiche mit unterschiedlicher Porositätsverteilung umfasst, wobei das Verfahren folgende Schritte aufweist:
a) es wird ein Vorläufermaterial aus karbonisierbarem Schaum mit offener Zellenporosität hergestellt, wie z.B. Polyurethanschaum, welches mindestens zwei Bereiche mit unterschiedlicher Porositätsverteilung umfasst, die mit einer Suspension aus Siliziumpulver in aushärtendem Harz imprägniert werden,
b) das Harz wird vernetzt,
c) der karbonisierbare Schaum und das Harz werden karbonisiert und der so hergestellte Kohlenstoff wird durch schrittweise Erhöhung der Temperatur bis auf eine Temperatur, die 1600°C nicht übersteigt, silizidiert.

3. Verfahren nach Anspruch 1 oder 2, bei dem nach dem Schritt e) des Verfahrens nach Anspruch 1 oder nach dem Schritt c) des Verfahrens nach Anspruch 2 der restliche Kohlenstoff durch Oxidation des Produktes bei einer Temperatur zwischen 650°C und 950°C entfernt wird.

4. Verfahren nach irgendeinem der Ansprüche 1 bis 3, **dadurch gekennzeichnet, dass** das aushärtende Harz ein wärmeaushärtendes Harz ist und dass seine Vernetzung durch schrittweise Erhöhung der Temperatur erfolgt.

5. Verfahren nach irgendeinem der Ansprüche 1 bis 3, **dadurch gekennzeichnet, dass** das aushärtende Harz ein fotoaushärtendes Harz ist.

6. Verfahren nach irgendeinem der Ansprüche 2 bis 5, **dadurch gekennzeichnet, dass** die Temperatur beim Schritt c) des Anspruchs 2 zwischen 1200°C und 1400°C liegt.

7. Verfahren nach irgendeinem der Ansprüche 2 bis 6, **dadurch gekennzeichnet, dass** das Vorläufermaterial einen Porositätsgradienten aufweist und/oder aus mindestens zwei Blöcken mit unterschiedlicher Porositätsverteilung zusammengesetzt ist.

8. Verfahren nach irgendeinem der Ansprüche 1 bis 7, **dadurch gekennzeichnet, dass** das Filtermedium eine spezifische Oberfläche von mindestens 7 m²/g, bevorzugt mindestens 10 m²/g und besonders bevorzugt zwischen 10 und 20 m²/g aufweist.

9. Verfahren nach irgendeinem der Ansprüche 4 oder 6 bis 8, **dadurch gekennzeichnet, dass** das wärmeaushärtende Harz ein Furfurylharz, ein Phenolharz oder ein Polyurethanharz oder eine Mischung aus diesen Harzarten ist.

10. Verfahren nach irgendeinem der Ansprüche 1 bis 9, **dadurch gekennzeichnet, dass** eine katalytisch aktive Phase durch Imprägnierung auf dem Filtermedium abgeschieden wird.

11. Verfahren nach Anspruch 10, **dadurch gekennzeichnet, dass** die katalytisch aktive Phase Rhodium, Platin, Palladium oder eine Kombination aus diesen Elementen enthält.

12. Verfahren nach irgendeinem der Ansprüche 1 bis 11, **dadurch gekennzeichnet, dass** nach der Imprägnierung des aushärtenden Harzes der karbonisierbare Schaum mit offener Zellenstruktur unter Spannung ausgehärtet wird, um eine dichtere Haut an der Oberfläche des Filtermediums aus β-SiC-Schaum auszubilden.

13. Verfahren nach irgendeinem der Ansprüche 1 bis 12, **dadurch gekennzeichnet, dass** das erhaltene Filtermedium mit Wasser imprägniert, eingefroren und durch Sägen, Bohren und/oder Bearbeiten geformt wird.

14. Teil aus β-SiC-Schaum, welches eine spezifische Oberfläche von mindestens 5 m²/g hat und mindestens zwei Bereiche A und B mit unterschiedlicher Porositätsverteilung aufweist, **dadurch gekennzeichnet, dass** das Teil durch chemische Umwandlung eines porösen Vorläufermaterials bestehend aus mindestens zwei Blöcken A' und B' mit unterschiedlicher Porositätsverteilung hergestellt wurde und dass die mindestens zwei Bereiche A und B aus der chemischen Umwandlung der mindestens zwei Blöcke A' und B' entstanden sind.

15. Teil aus β-SiC-Schaum nach Anspruch 14, **dadurch gekennzeichnet, dass** der Schaum eine mittlere Porengröße zwischen 500 µm und 4000 µm hat, die bevorzugt mindestens 800 µm beträgt und die bevorzugt zwischen 900 µm und 3000 µm und besonders bevorzugt zwischen 900 µm und 1800 µm liegt.

16. Teil aus β-SiC-Schaum nach irgendeinem der Ansprüche 14 oder 15, **dadurch gekennzeichnet, dass** seine Dichte zwischen 0,05 und 0,5 g/cm³ und bevorzugt zwischen 0,1 und 0,2 g/cm³ liegt.

17. Teil aus β-SiC-Schaum, **dadurch gekennzeichnet, dass** es durch ein Verfahren nach irgendeinem der Ansprüche 1 bis 13 hergestellt wurde.

18. Teil aus β-SiC-Schaum nach Anspruch 17, **dadurch gekennzeichnet, dass** es eine katalytisch aktive Phase aufweist, die Rhodium, Platin, Palladium oder eine Kombination aus diesen Elementen enthält.

19. Patronenvorrichtung für katalytischen Filter, umfassend ein Filtermedium aus β-SiC-Schaum mit einer spezifischen Oberfläche von mindestens 5 m²/g und mindestens einer aktiven Phase, wobei die Patrone von einer soliden Wand aus gasdichtem Material umgeben und mit mindestens zwei Öffnungen versehen ist, von denen eine für den Eintritt der zu filtrierenden Gase und die andere für den Austritt der zumindest von einem Teil ihrer festen Partikel befreiten Gase bestimmt ist,
wobei die Patrone **dadurch gekennzeichnet ist, dass** das Filtermedium mindestens zwei Bereiche mit unterschiedlicher Porosität umfasst.

20. Vorrichtung nach Anspruch 19, **dadurch gekennzeichnet, dass** die Patrone mindestens zwei Filtermedium-Blöcke A' und B' mit unterschiedlicher Porositätsverteilung enthält.

21. Vorrichtung nach Anspruch 19 oder 20, **dadurch gekennzeichnet, dass** das Filtermedium mindestens ein Teil aus β-SiC-Schaum nach irgendeinem der Ansprüche 14 bis 18 umfasst.

22. Vorrichtung nach einem der Ansprüche 19 bis 21, **dadurch gekennzeichnet, dass** der oder die Blöcke als Bestandteil des katalytischen Filters durch Abscheidung mindestens eines Aktivstoffs mit katalytischer Wirkung aktiviert wurden.

23. Vorrichtung nach Anspruch 19 bis 22, **dadurch gekennzeichnet, dass** der Aktivstoff aus mindestens einem Element ausgewählt aus der Gruppe bestehend aus Pt, Pd, Rh besteht.

24. Vorrichtung nach Anspruch 23, **dadurch gekennzeichnet, dass** die Konzentration des Aktivstoffs zwischen 0,1 und 2 Masse-% des Trägers, vorzugsweise zwischen 0,2 und 1,5 Masse-% und insbesondere zwischen 0,2 und 0,5 % liegt.

25. Vorrichtung nach irgendeinem der Ansprüche 19 bis 24, **dadurch gekennzeichnet, dass** sie mindestens ein Heizmittel umfasst.

26. Vorrichtung nach Anspruch 25, **dadurch gekennzeichnet, dass** mindestens eines der Heizmittel außerhalb der Vorrichtung angeordnet und/oder in die Vorrichtung geschaltet ist.

27. Vorrichtung nach Anspruch 26, **dadurch gekennzeichnet, dass** mindestens eines der Heizmittel die durch den Durchfluss eines elektrischen Stroms durch mindestens einen Teil der Vorrichtung bewirkte Erwärmung ist.

28. Vorrichtung nach Anspruch 25, **dadurch gekennzeichnet, dass** mindestens eines der Heizmittel die Mikrowellen-Erhitzung ist.

29. Vorrichtung nach einem der Ansprüche 25 bis 28, **dadurch gekennzeichnet, dass** sie während ihrer gesamten Betriebsdauer oder während bestimmter Phasen ihres Betriebs auf eine Temperatur kleiner oder gleich 500°C erhitzt wird.

30. Vorrichtung nach Anspruch 29, **dadurch gekennzeichnet, dass** die Temperatur zwischen 200 und 500°C, bevorzugt zwischen 220 und 400°C und besonders bevorzugt zwischen 240 und 480°C liegt.

31. Vorrichtung nach einem der Ansprüche 19 bis 30, **dadurch gekennzeichnet, dass** das Medium durch Zusammensetzen zweier oder mehrerer Filtermedium-Blöcke gewonnen wird, von denen mindestens zwei eine unterschiedliche Porositätsverteilung haben.

32. Verwendung einer Vorrichtung nach irgendeinem der Ansprüche 19 bis 31 für die zumindest partielle Entfernung der in den Abgasen eines Dieselmotors vorhandenen Rußpartikel.
